# FASCICULE DE BREVET EUROPEEN

(11) **EP 3 640 111 B1**
(45) Date de publication et mention de la délivrance du brevet: **28.07.2021**
(21) Numéro de dépôt: 19202736.5
(22) Date de dépôt: 11.10.2019
(51) Int. Cl.: B61B 10/04, B62B 3/00

(54) **CHARIOT ET ENSEMBLE COMPRENANT UN VÉHICULE ET UN TEL CHARIOT**
WAGEN UND EINHEIT, DIE EIN FAHRZEUG UND EINEN SOLCHEN WAGEN UMFASST
CARRIAGE AND ASSEMBLY COMPRISING A VEHICLE AND SUCH A CARRIAGE

(30) Priorité: 15.10.2018 FR 1859508
(43) Date de publication de la demande: 22.04.2020
(73) Titulaire: ALSTOM Transport Technologies, 93400 Saint-Ouen (FR)
(72) Inventeur: GILBERT, Michel, 17290 Thaire (FR)
(74) Mandataire: Lavoix

(56) Documents cités:
- CA-A1- 2 481 726
- JP-B2- 3 965 720
- US-A- 5 348 326
- US-B2- 6 488 304

## Description

La présente invention concerne un chariot. La présente invention concerne également un ensemble comprenant au moins un tel chariot et un véhicule propre à tracter le ou les chariots.

Des chariots à six roues sont utilisés dans un grand nombre d'applications. Un tel chariot est connu du document US 5348326 A. En particulier, de tels chariots comprenant, à leurs deux extrémités, deux paires de roues libres de pivoter autour d'un axe vertical et, au centre du chariot, une paire de roues dont l'orientation est fixe par rapport au chariot sont attelés à des véhicules tracteurs pour former des trains. Les trains ainsi formés sont, par exemple, utilisés pour transporter des pièces entre des postes de travail éloignés dans des ateliers. Un tel arrangement de roues permet, en effet, un bon guidage lors de la traction. Toutefois, les chariots de ce type sont nécessairement peu maniables, du fait de la présence des roues fixes qui limitent leur capacité à pivoter sur eux-mêmes. Le positionnement précis et la manipulation des chariots, par exemple par un opérateur lorsque les chariots ont été détachés du train, sont donc difficiles.

Au contraire, des chariots à quatre roues pivotantes ont une grande maniabilité mais sont, de ce fait, moins adaptés pour être tractés dans un train, puisque cette maniabilité augmente le risque que le chariot s'écarte de la trajectoire du véhicule tracteur.

Des chariots présentant deux configurations existent, l'une des configurations présentant six roues dont deux fixes et l'autre configuration présentant quatre roues pivotantes. Ces chariots permettent donc une traction précise ou une grande maniabilité, selon la configuration choisie. Cependant, ces chariots ne sont pas adaptés au transport de charges lourdes. En effet, ces chariots passent d'une configuration à quatre roues à une configuration à six roues en soulevant les deux roues fixes à l'aide d'une pédale, ce qui demande à l'opérateur une force trop importante lorsque le chariot est lourdement chargé. Or, dans un atelier, un chariot est en général chargé dans sa configuration à quatre roues par un opérateur puis basculé dans la configuration à six roues pour être déplacé jusqu'à un autre poste de travail.

Un des buts de l'invention est de proposer un chariot attelable qui présente une bonne précision de guidage lorsqu'il est tracté par un véhicule, et qui soit aisément maniable par un opérateur, tout en étant adapté au transport de charges plus lourdes que les chariots de l'état de la technique.

A cet effet, l'invention a pour objet un chariot comportant une plate-forme, un timon, une première et une deuxième paires de roues mobiles et une paire de roues fixes, chaque roue étant configurée pour pivoter autour d'un axe transversal chaque roue mobile étant, en outre, configurée pour pivoter, par rapport à la plate-forme, autour d'un axe d'élévation sensiblement perpendiculaire à l'axe transversal, le timon étant mobile en rotation par rapport à la plate-forme entre une position relevée et une position abaissée dans laquelle le timon est configuré pour être fixé à un véhicule ou à un autre chariot, une hauteur étant définie pour chaque paire de roue comme étant la distance entre la plate-forme et le point de la roue le plus éloigné de la plate-forme, la paire de roues fixes étant interposée, selon un axe longitudinal du chariot, entre les deux paires de roues mobiles. La première paire de roues mobiles est mobile selon l'axe d'élévation entre une position haute dans laquelle les deux paires de roues mobiles et la paire de roues fixes présentent des hauteurs sensiblement identiques et une position basse dans laquelle la hauteur de la première paire est strictement supérieure à la hauteur de la paire de roues fixes, et en ce que le chariot comporte un mécanisme de verrouillage configuré pour maintenir la première paire dans la position basse lorsque le timon est dans sa position relevée.

Grâce à l'invention, lorsque le timon est dans sa position relevée, les deux paires de roues mobiles sont en contact avec le sol tandis que les roues fixes ne le sont pas. Le chariot est alors déplaçable aisément par un opérateur dans une configuration à quatre roues en contact avec le sol. Au contraire, lorsque le timon est dans sa position abaissée permettant la traction par un véhicule, les deux paires de roues pivotantes et la paire de roues fixes sont en contact avec le sol et le guidage du chariot lorsqu'il est tracté est alors plus précis dans une configuration à six roues en contact avec le sol. En outre, le déplacement de la première paire de roues de sa position haute à sa position basse, pour placer le chariot dans sa configuration à quatre roues, implique un soulèvement du chariot qui est aisé puisque le chariot est en général vide à ce moment. Lorsque le chariot est chargé, il n'est en général nécessaire que de déplacer la première paire de roues de sa position basse à sa position haute. Ce mouvement n'est pas limité par le poids du chariot, et est donc aisé même lorsque le chariot est lourdement chargé.

Selon d'autres aspects avantageux mais non obligatoires de l'invention, le chariot comprend une ou plusieurs des caractéristiques suivantes, prises isolément ou selon toutes les combinaisons techniquement possibles :
- la première paire est configurée pour être déplacée par gravité de sa position haute jusqu'à sa position basse lorsque le chariot est soulevé.
- la plate-forme présente une première et une deuxième partie extrême, la première paire de roues mobiles étant positionnée à la première partie extrême, la deuxième paire de roues mobiles étant positionnée à la deuxième partie extrême, le timon étant fixé à la première partie extrême.
- la première paire est solidaire d'un plateau mobile en translation par rapport à la plate-forme.
- le mécanisme de verrouillage comprend une butée solidaire de la plate-forme et des moyens de commande solidaires du plateau, les moyens de commande étant déplaçables par le timon entre une position de verrouillage empêchant un déplacement de la première paire depuis sa position basse jusqu'à sa position haute, et une position de déverrouillage permettant un déplacement de la première paire depuis sa position basse jusqu'à sa position haute.
- le timon est mobile autour d'un arbre solidaire de la plate-forme et les moyens de commande comportent une première barre transversale, les moyens de commande étant mobiles en rotation autour d'un axe transversal solidaire du plateau et étant configurés pour que, lorsque le timon est déplacé depuis sa position abaissée jusqu'à sa position relevée, le timon vient en appui contre la première barre pour déplacer les moyens de commande depuis leur position de déverrouillage jusqu'à leur position de verrouillage.
- les moyens de commande comportent une deuxième barre transversale configurée pour que, lorsque le timon est déplacé depuis sa position relevée jusqu'à sa position abaissée, le timon vient en appui contre la deuxième barre pour déplacer les moyens de commande depuis leur position de verrouillage jusqu'à leur position de déverrouillage.
- une distance entre la première barre et la deuxième barre est comprise entre 40 millimètres et 50 millimètres.
- une distance entre les positions haute et basse de la première paire de roues est comprise entre 30 millimètres et 60 millimètres.

L'invention a également pour objet un ensemble comprenant au moins un chariot tel que défini ci-dessus et un véhicule propre à tracter le ou les chariots.

Les caractéristiques et avantages de l'invention apparaitront à la lecture de la description qui va suivre, donnée uniquement à titre d'exemple et non limitatif, et faite en référence aux dessins annexés, sur lesquels :
- la figure 1 est une vue de profil d'un chariot selon l'invention comprenant une paire de roues mobiles entre une position haute et une position basse, cette paire étant représentée en position haute,
- la figure 2 est une vue de profil du chariot de la figure 1, dans lequel la paire de roues mobiles est représentée en position basse,
- la figure 3 est une vue en perspective de l'extrémité du chariot de la figure 1 dans laquelle la paire de roues mobiles est représentée en position basse.

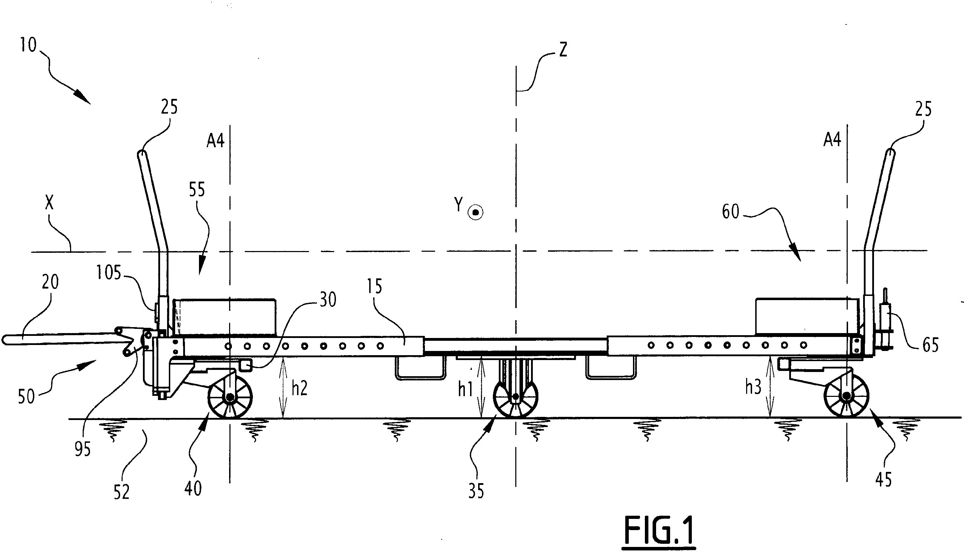

Un chariot 10 est représenté sur la figure 1. Le chariot 10 comporte une plate-forme 15, un timon 20, au moins une barre de traction 25, un plateau 30, une paire de roues fixes 35, une première paire de roues mobiles 40, une deuxième paire de roues mobiles 45, et un mécanisme de verrouillage 50. Sur la figure 1, le chariot 10 comporte deux barres de traction 25.

Le chariot 10 fait, par exemple, partie d'un ensemble comprenant au moins un chariot 10 et un véhicule propre à tracter le ou les chariots 10.

Un axe longitudinal X et un axe transversal Y sont définis pour le chariot 10. Les axes longitudinal X et transversal Y sont perpendiculaires l'un à l'autre. Lorsque le chariot 10 est en appui sur un sol horizontal 52, les axes longitudinal X et transversal Y sont compris chacun dans un plan horizontal.

L'axe longitudinal X est celui selon lequel le chariot 10 présente la plus grande dimension. L'axe longitudinal X est, en particulier, l'axe selon lequel le chariot 10 est prévu pour être tracté.

Un axe d'élévation Z, sensiblement perpendiculaire à l'axe transversal Y et à l'axe longitudinal X, est défini pour le chariot 10. Il est entendu par « sensiblement perpendiculaire » qu'un angle entre les deux axes considérés est égal à 90 degrés (°), à 10° près. Ainsi, lorsque le chariot repose sur un sol 52 horizontal, l'axe d'élévation Z est sensiblement vertical.

La plate-forme 15 est configurée pour servir de support à un ou plusieurs objets que le chariot 10 est propre à transporter. Par exemple, la plate-forme 15 présente une face supérieure plane.

La plate-forme 15 présente une première partie extrême 55 et une deuxième partie extrême 60. La plate-forme 15 s'étend entre la première partie extrême 55 et la deuxième partie extrême 60 selon l'axe longitudinal X du chariot 10. Par exemple, la plate-forme 15 est rectangulaire, les côtés de la plate-forme 15 étant chacun parallèle à l'axe longitudinal X ou à l'axe transversal Y du chariot 10.

La plate-forme 15 comporte un élément d'accroche 65 permettant l'attelage du timon 20 d'un autre chariot 10. L'élément d'accroche 65 est fixé à la deuxième partie extrême 60.

Le timon 20 comporte une troisième partie extrême 70 et une quatrième partie extrême 75, entre lesquelles le timon 20 s'étend.

Le timon 20 est mobile en rotation par rapport à la plate-forme 15 entre une position abaissée et une position relevée. En particulier, le timon 20 est mobile en rotation autour d'un premier axe A1, sensiblement parallèle à l'axe transversal Y.

Lorsque le timon 20 est dans sa position abaissée, le timon 20 est configuré pour être fixé au véhicule ou à un autre chariot 10. En particulier, la troisième partie extrême 70 est configurée pour être fixée à l'élément d'accroche 65 du véhicule ou d'un autre chariot 10. Lorsque le timon 20 est dans sa position abaissée, le timon 20 s'étend, par exemple, sensiblement selon l'axe longitudinal X.

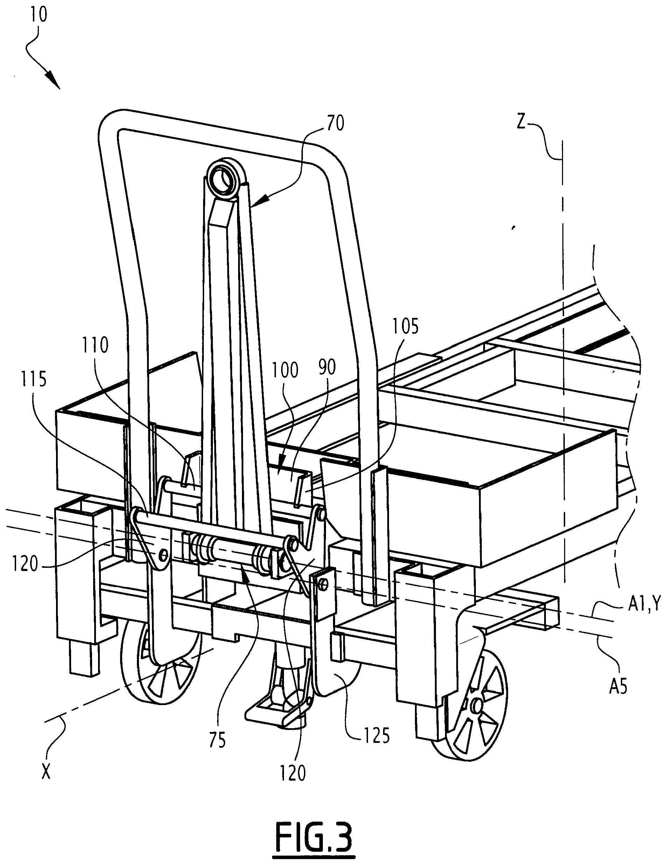

Lorsque le timon 20 est dans sa position relevée, un angle entre l'axe longitudinal X et la direction dans laquelle le timon 20 s'étend est compris entre -15 degrés (°) et +100 °. Par exemple, lorsque le timon 20 est dans sa position relevée, le timon 20 s'étend selon l'axe d'élévation Z. Sur les figures 1 et 3, le timon 20 est représenté dans sa position relevée.

La quatrième partie extrême 75 est fixée à la plate-forme 15 de manière à permettre une rotation du timon 20 par rapport à la plate-forme 15. Par exemple, la quatrième partie extrême 75 est mobile en rotation autour d'un arbre solidaire de la plate-forme 15 et s'étendant selon le premier axe A1.

Chaque barre de traction 25 est propre à permettre à un opérateur de déplacer le chariot 10, par exemple en tirant ou en poussant sur la ou les barres de traction 25, qui forment chacune un élément de préhension du chariot. Chaque barre de traction 25 est, par exemple, respectivement positionnée à l'une des première et deuxième parties extrêmes 55, 60.

Chaque barre de traction 25 est fixée à la plate-forme 15.

Le plateau 30 est mobile en translation par rapport à la plate-forme 15. En particulier, le plateau 30 est mobile par rapport à la plate-forme selon l'axe d'élévation Z entre une position proche de la plate-forme 15 et une position éloignée de la plate-forme 15.

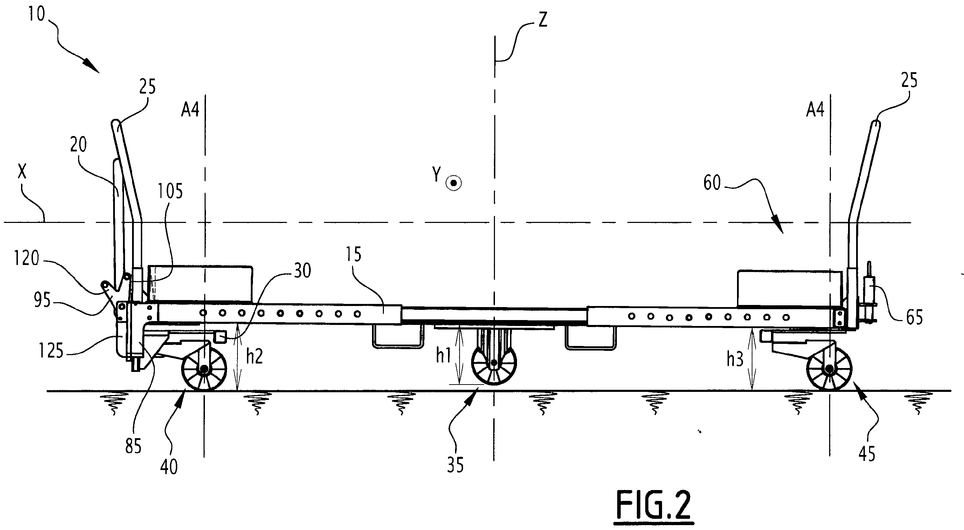

Le plateau 30 est fixé à la première partie extrême 55. Selon l'exemple de la figure 2, le plateau 30 est monté dans des rails 85 fixés à la première partie extrême 55 pour former une liaison glissière. Les rails 85 permettent de guider en translation le plateau 30.

Le plateau 30 est alors propre à être déplacé par gravité selon l'axe d'élévation Z lorsque le chariot 10 est soulevé, par exemple par un chariot élévateur.

Le plateau 30 s'étend dans un plan sensiblement perpendiculaire à l'axe d'élévation Z.

Une hauteur h1, h2, h3 est définie pour chaque paire de roues 35, 40, 45. La hauteur h1, h2, h3 est la distance, mesurée selon l'axe d'élévation Z, entre la plate-forme 15 et le point de la roue considérée le plus éloigné de plate-forme 15. En d'autres termes, la hauteur h1, h2, h3 correspond à la hauteur de la plate-forme par rapport au sol 52 au droit d'une paire de roues lorsque cette paire de roues repose sur le sol 52.

Les deux roues 35, 40, 45 d'une même paire de roues présentent une hauteur h1, h2, h3 identique.

Il est entendu par « roue fixe » une roue dont la direction est fixe par rapport à la plate-forme 15. Chaque roue fixe 35 est donc configurée pour pivoter autour d'un deuxième axe pour permettre au chariot 10 de rouler sur le sol 52, le deuxième axe étant fixe par rapport à la plate-forme 15. Le deuxième axe est parallèle à l'axe transversal Y de sorte que la rotation des roues fixes entraîne un déplacement du chariot selon l'axe longitudinal X.

Chaque roue fixe 35 est fixée à la plate-forme 15, par exemple au milieu des plus grands côtés de la plate-forme 15.

La hauteur de la paire de roues fixes 35 est appelée première hauteur h1. La première hauteur h1 est constante.

Chaque roue mobile 40, 45 est configurée pour pivoter autour d'un troisième axe pour permettre au chariot 10 de rouler sur le sol 52, l'orientation du troisième axe par rapport à la plate-forme 15 étant modifiable. En particulier, chaque roue mobile 40, 45 est configurée pour que le troisième axe soit mobile en rotation par rapport à la plate-forme 15 dans un plan perpendiculaire à l'axe d'élévation Z. Par exemple, chaque roue mobile 40, 45 est configurée pour pivoter, par rapport à la plate-forme 15, autour d'un quatrième axe A4 parallèle à l'axe d'élévation Z.

Les roues fixes 35 sont interposées, selon l'axe longitudinal X, entre les deux paires de roues mobiles 40, 45.

La première paire de roues mobiles 40 est positionnée au droit de la première partie extrême 55 de la plate-forme 60. La deuxième paire de roues mobiles 45 est positionnée au droit de la deuxième partie extrême 60.

Les roues mobiles 40, 45 de chaque paire de roues mobiles 40, 45 sont, par exemple, positionnées au niveau des plus grands côtés de la plate-forme 15.

La première paire de roues mobiles 40 est mobile par rapport à la plate-forme 15 selon l'axe d'élévation Z entre une position haute et une position basse. Par exemple, la première paire de roues mobiles 40 est mobile en translation par rapport à la plate-forme 15.

Les positions haute et basse de la première paire de roues mobiles 40 sont représentées sur les figures 1 et 2, respectivement.

La hauteur de la première paire de roues mobiles 40 est appelée deuxième hauteur h2, et la hauteur de la deuxième paire de roues mobiles 45 est appelée troisième hauteur h3.

Lorsque la première paire de roues mobiles 40 est dans la position haute, la deuxième hauteur h2 et la troisième hauteur h3 sont inférieures ou égales à la première hauteur h1. En particulier, la deuxième hauteur h2 et la troisième hauteur h3 sont strictement inférieures à la première hauteur h1. Par exemple, une différence entre la première hauteur h1 et la deuxième hauteur h2 est égale à 15 millimètres (mm). Une différence entre la première hauteur h1 et la troisième hauteur h3 est, par exemple, elle aussi égale à 15 millimètres (mm).

Ainsi, lorsque le chariot 10 est posé sur un sol 52 plat, une seule paire de roues mobiles 40, 45 parmi la première paire de roues mobiles 40 et la deuxième paire de roues mobiles 45 est en appui sur le sol 52. La paire de roues fixes 35 est, en outre, en appui sur le sol 52.

Lorsque la première paire de roues mobiles 40 est dans la position basse, la deuxième hauteur h2 est strictement supérieure à la première hauteur h1. Ainsi, lorsque le chariot 10 est posé sur un sol 52 plat, la première paire de roues mobiles 40 et la deuxième paire de roues mobiles 45 sont en appui sur le sol 52 mais la paire de roues fixes 35 n'est pas en appui sur le sol 52.

La première paire de roues mobiles 40 est configurée pour être déplacée par gravité depuis sa position haute jusqu'à sa position basse lorsque le chariot 10 est soulevé. Par exemple, la première paire de roues mobiles 40 est montée sur une glissière. En particulier, la première paire de roues mobiles 40 est fixée au plateau 30 et solidaire du déplacement du plateau 30 selon l'axe d'élévation Z. Ainsi, lorsque le plateau 30 est dans sa position proche de la plate-forme 15, la première paire de roues mobiles 40 est dans sa position haute et, lorsque le plateau 30 est dans sa position éloignée de la plate-forme 15, la première paire de roues mobiles 40 est dans sa position basse.

Une distance, selon l'axe d'élévation Z, entre la position haute et la position basse de la première paire de roues mobiles 40 est comprise entre 30 mmet 60 mm.

En complément facultatif, des biellettes permettent une transmission d'effort entre la partie du plateau 30 la plus éloignée des rails 85 et la plate-forme 15 afin d'éviter une déformation du plateau 30 ou des rails 85 sous l'effet du moment mécanique causé par le poids du chariot 10 sur les roues 40.

La troisième hauteur h3 est constante.

Le mécanisme de verrouillage 50 est représenté en détails sur la figure 3.

Le mécanisme de verrouillage 50 est configuré pour maintenir la première paire de roues mobiles 40 dans la position basse lorsque le timon 20 est dans sa position relevée.

Le mécanisme de verrouillage 50 comprend une butée 90 et des moyens de commande 95.

La butée 90 est solidaire de la plate-forme 15. La butée 90 comprend, par exemple, une première platine 100 et au moins un élément de butée 105, par exemple deux éléments de butée 105. Il est à noter que le nombre d'éléments de butée 105 est susceptible de varier.

La première platine 100 est fixée à la plate-forme 15. En particulier, la première platine 100 est fixée à la première partie extrême 55.

La première platine 100 est perpendiculaire à l'axe longitudinal X.

Les éléments de butée 105 s'étendent à partir de la première platine 100 selon l'axe longitudinal X en s'éloignant de la plate-forme 15.

Chaque élément de butée 105 est fixé à la première platine 100. Selon l'exemple de la figure 3, les éléments de butée 105 sont venus de matière avec la première platine 100.

Les éléments de butée 105 sont disposés aux deux extrémités de la première platine 100 selon l'axe transversal Y.

Les moyens de commande 95 sont déplaçables par le timon 20 entre une position de verrouillage et une position de déverrouillage.

Lorsque les moyens de commande 95 sont dans la position de déverrouillage, la première paire de roues mobiles 40 est déplaçable depuis sa position basse jusqu'à sa position haute.

Lorsque les moyens de commande 95 sont dans la position de verrouillage, les moyens de commande 95 empêchent un déplacement de la première paire de roues mobiles 40 depuis sa position basse jusqu'à sa position haute.

Les moyens de commande 95 sont solidaires du plateau 30. En particulier, les moyens de commande 95 sont solidaires du plateau 30 lors du déplacement du plateau 30 selon l'axe d'élévation Z par rapport à la plate-forme 15. Les moyens de commande 95 sont alors configurés pour empêcher le déplacement du plateau 30 depuis sa position éloignée de la plate-forme 15 jusqu'à sa position proche de la plate-forme 15 lorsque les moyens de commande 95 sont dans la position de verrouillage.

Les moyens de commande 95 sont mobiles en rotation autour d'un cinquième axe A5 par rapport au plateau 30. Le cinquième axe A5 est parallèle à l'axe transversal Y. Le cinquième axe A5 est solidaire du plateau 30. En d'autre termes, l'axe de rotation des moyens de commande 95 suit le déplacement du plateau 30 selon l'axe d'élévation Z.

Les moyens de commande 95 comprennent une première barre 110, une deuxième barre 115, deux deuxièmes platines 120 et deux supports 125. Chaque deuxième platine 120 est montée sur un support 125 et mobile en rotation par rapport à ce support 125 autour du cinquième axe A5.

La première barre 110 s'étend selon l'axe transversal Y entre les deux deuxièmes platines 120. La première barre 110 est interposée entre le timon 20 et la butée 90.

La première barre 110 est configurée pour que, lorsque les moyens de commande 95 sont dans leur position de déverrouillage, le timon 20 vient en appui contre la première barre 110 pour déplacer les moyens de commande 95 depuis la position de verrouillage jusqu'à la position de déverrouillage.

Une distance entre la première barre 110 et le cinquième axe A5 est comprise entre 40mm et 60mm.

Lorsque le plateau 30 est dans sa position éloignée de la plate-forme 15, et que la première paire de roues mobiles 40 est donc dans sa position basse, et que les moyens de commande 95 sont dans la position de verrouillage, la première barre 110 vient en appui contre les éléments de butée 105 pour empêcher un mouvement du plateau 30 vers la position proche de la plate-forme 15.

Au contraire, lorsque les moyens de commande 95 sont déplacés jusqu'à la position de verrouillage, la rotation des moyens de commande 95 autour du cinquième axe A5 éloigne la première barre 110 des éléments de butée 105 et le déplacement du plateau 30 et de la première paire de roues mobiles 40 est alors possible.

La deuxième barre 115 s'étend selon l'axe transversal Y entre les deux deuxièmes platines 120. Le timon 20 est interposé entre la deuxième barre 115 et la première barre 110. En particulier, la quatrième partie extrême du timon 20 est interposée entre la deuxième barre 115 et la première barre 110.

Une distance entre la deuxième barre 115 et le cinquième axe A5 est comprise entre 50 mm et 80 mm.

La deuxième barre 115 est configurée pour que, lorsque les moyens de commande 95 sont dans la position de verrouillage et que le timon 20 est déplacé depuis sa position relevée jusqu'à sa position abaissée, le timon 20 vient en appui sur la deuxième barre 115 pour déplacer les moyens de commande 95 depuis la position de verrouillage jusqu'à la position de déverrouillage.

Une distance entre la deuxième barre 115 et la première barre 110 est comprise entre 40 mm et 50 mm.

Un exemple de fonctionnement du chariot 10 va maintenant être décrit.

Au cours une première étape, le chariot 10 est posé sur le sol 52, à vide, la première paire de roues mobiles 40 étant dans sa position haute et le timon 20 est dans sa position abaissée. Les roues fixes 35reposent alors sur le sol 52, comme représenté sur la figure 1.

Au cours une deuxième étape, le chariot 10 est soulevé, par exemple par un chariot élévateur. Sous l'effet de la gravité, le plateau 30 glisse jusqu'à sa position éloignée de la plate-forme 15. La première paire de roues mobiles 40 est alors dans sa position basse. Un opérateur relève alors le timon 20 jusqu'à sa position relevée. Au cours de ce mouvement, le timon 20 vient en appui contre la première barre 110 et déplace donc les moyens de commande 95 dans leur position de verrouillage.

Selon une variante, lors de la deuxième étape, le timon 20 est déplacé jusqu'à sa position relevée par un ressort sans action de l'opérateur.

Au cours d'une troisième étape, le chariot 10 est reposé sur le sol 52. Les moyens de commande 95 étant dans leur position de verrouillage, la première barre 110 vient en appui contre les éléments de butée 105 pour empêcher la première paire de roues mobiles 40 de se déplacer, sous l'effet du poids du chariot 10, jusqu'à la position haute. Seules les deux paires de roues mobiles 40, 45 sont alors en appui sur le sol 52, comme représenté sur la figure 2.

Au cours d'une quatrième étape, un opérateur déplace manuellement le chariot 10 à l'aide des barres de traction 25, et dépose sur la plate-forme 15 des objets à déplacer. Le déplacement du chariot 10 est alors aisé pour l'opérateur, car les roues mobiles permettent au chariot de tourner sur lui-même, ce qui en facilite la manipulation.

Au cours d'une cinquième étape, un véhicule est approché du chariot 10 et le timon 20 est abaissé pour atteler le chariot 10 au véhicule. Les moyens de commande 95 sont ainsi déplacés, par l'action du timon sur la deuxième barre 115, dans leur position de déverrouillage, et le plateau 30 remonte dans sa position proche de la plate-forme 15 sous l'effet du poids du chariot 10.

Au cours d'une sixième étape, le véhicule tracte le chariot 10 vers une destination. Lors de son déplacement, les roues de la paire de roues fixes 35reposent alors sur le sol 52, et le guidage du chariot 10 lors de sa traction est précis, car les roues fixes tendent à entraîner un déplacement rectiligne du chariot selon l'axe longitudinal X, ce qui évite que le chariot ne tourne sur lui-même de façon intempestive.

Au cours d'une septième étape, le timon 20 est détaché du véhicule. Le chariot 10 est soulevé, et le plateau 30 glisse jusqu'à sa position éloignée de la plate-forme 15. La première paire de roues mobiles 40 est alors dans sa position basse. Un opérateur relève alors le timon 20 jusqu'à sa position relevée. Au cours de ce mouvement, le timon 20 vient en appui contre la première barre 110 et déplace donc les moyens de commande 95 dans leur position de verrouillage.

Au cours d'une huitième étape, l'opérateur déplace le chariot 10 manuellement.

Grâce à l'invention, le chariot 10 passe aisément d'une position dans laquelle les six roues sont en contact avec le sol 52 à une position dans laquelle seules les quatre roues mobiles sont en contact avec le sol 52, et vice-versa, même si le chariot 10 est lourd ou lourdement chargé.

En outre, les roues 40 qui sont déplacées par rapport à la plate-forme selon l'axe d'élévation Z sont proches du timon 20. La fabrication du chariot 10 est donc facilitée et le mécanisme de déplacement des roues rendu plus simple.

Le mécanisme de verrouillage 50 est, par ailleurs, d'une fabrication aisée et simple à mettre en œuvre, puisqu'il utilise un mécanisme simple de butée.

De plus, le mécanisme de verrouillage 50 est susceptible d'être installé sur des chariots 10 déjà existants. En particulier, le mécanisme de verrouillage 50 est compatible avec un grand nombre de timons 20 différents. En effet, la première barre 110 est actionnée par simple appui du timon 20.

Par ailleurs, l'utilisation de la deuxième barre 20 pour déverrouiller le mécanisme de commande 95 permet également une compatibilité avec un grand nombre de timons 20 différents et une installation a posteriori sur des chariots déjà existants.

La distance entre les deux barres 110 et 115 est également choisie pour permettre une bonne compatibilité avec des timons de types variés.

## Revendications

1. Chariot (10) comportant une plate-forme (15), un timon (20), une première (40) et une deuxième (45) paires de roues mobiles et une paire de roues fixes (35), chaque roue (35, 40, 45) étant configurée pour pivoter autour d'un axe transversal, chaque roue mobile (40, 45) étant, en outre, configurée pour pivoter, par rapport à la plate-forme (15), autour d'un axe d'élévation (A4) sensiblement perpendiculaire à l'axe transversal, le timon (20) étant mobile en rotation par rapport à la plate-forme (15) entre une position relevée et une position abaissée dans laquelle le timon (20) est configuré pour être fixé à un véhicule ou à un autre chariot (10), une hauteur (h1, h2, h3) étant définie pour chaque paire de roue (35, 40, 45) comme étant la distance entre la plate-forme (15) et le point de la roue (35, 40, 45) le plus éloigné de la plate-forme (15), la paire de roues fixes (35) étant interposée, selon un axe longitudinal (X) du chariot (10), entre les deux paires de roues mobiles (40, 45),
le chariot (10) étant **caractérisé en ce que** la première paire de roues mobiles (40) est mobile selon l'axe d'élévation (Z) entre une position haute dans laquelle les deux paires de roues mobiles (40, 45) et la paire de roues fixes (35) présentent des hauteurs (h1, h2, h3) sensiblement identiques et une position basse dans laquelle la hauteur (h2) de la première paire (40) est strictement supérieure à la hauteur (h1) de la paire de roues fixes (35), et **en ce que** le chariot (10) comporte un mécanisme de verrouillage (50) configuré pour maintenir la première paire (40) dans la position basse lorsque le timon (20) est dans sa position relevée.

2. Chariot (10) selon la revendication 1, dans lequel la première paire (40) est configurée pour être déplacée par gravité de sa position haute jusqu'à sa position basse lorsque le chariot (10) est soulevé.

3. Chariot (10) selon la revendication 1 ou 2, dans lequel la plate-forme (15) présente une première (55) et une deuxième (60) partie extrême, la première paire de roues mobiles (40) étant positionnée à la première partie extrême (55), la deuxième paire de roues mobiles (45) étant positionnée à la deuxième partie extrême (60), le timon (20) étant fixé à la première partie extrême (55).

4. Chariot (10) selon l'une quelconque des revendications 1 à 3, dans lequel la première paire (40) est solidaire d'un plateau (30) mobile en translation par rapport à la plate-forme (15).

5. Chariot (10) selon la revendication 4, dans lequel le mécanisme de verrouillage (50) comprend une butée (90) solidaire de la plate-forme (15) et des moyens de commande (95) solidaires du plateau (30), les moyens de commande (95) étant déplaçables par le timon (20) entre une position de verrouillage empêchant un déplacement de la première paire (40) depuis sa position basse jusqu'à sa position haute, et une position de déverrouillage permettant un déplacement de la première paire (40) depuis sa position basse jusqu'à sa position haute.

6. Chariot (10) selon la revendication 5, dans lequel le timon (20) est mobile autour d'un arbre solidaire de la plate-forme (15) et les moyens de commande (95) comportent une première barre transversale (110), les moyens de commande (95) étant mobiles en rotation autour d'un axe transversal solidaire du plateau (30) et étant configurés pour que, lorsque le timon (20) est déplacé depuis sa position abaissée jusqu'à sa position relevée, le timon (20) vient en appui contre la première barre (110) pour déplacer les moyens de commande (95) depuis leur position de déverrouillage jusqu'à leur position de verrouillage.

7. Chariot (10) selon la revendication 6, dans lequel les moyens de commande (95) comportent une deuxième barre transversale (115) configurée pour que, lorsque le timon (20) est déplacé depuis sa position relevée jusqu'à sa position abaissée, le timon (20) vient en appui contre la deuxième barre (115) pour déplacer les moyens de commande (95) depuis leur position de verrouillage jusqu'à leur position de déverrouillage.

8. Chariot (10) selon la revendication 7, dans lequel une distance entre la première barre (110) et la deuxième barre (115) est comprise entre 40 millimètres et 50 millimètres.

9. Chariot (10) selon l'une quelconque des revendications précédentes, dans lequel une distance entre les positions haute et basse de la première paire de roues (40) est comprise entre 30 millimètres et 60 millimètres.

10. Ensemble comprenant au moins un chariot (10) selon l'une quelconque des revendications 1 à 9 et un véhicule propre à tracter le ou les chariots (10).

## Patentansprüche

1. Wagen (10) mit einer Plattform (15), einer Deichsel (20), einem ersten (40) und einem zweiten (45) Paar bewegbarer Räder und einem Paar fixer Räder (35), wobei jedes Rad (35, 40, 45) konfiguriert ist, um um eine Querachse zu drehen, wobei jedes bewegbare Rad (40, 45) ferner konfiguriert ist, um bezüglich der Plattform (15) um eine Hochachse (A4) zu drehen, die im Wesentlichen senkrecht zu der Querachse ist, wobei die Deichsel (20) bezüglich der Plattform (15) drehbewegbar ist zwischen einer Aufgestellt-Position und einer Abgesenkt-Position, in welcher die Deichsel (20) konfiguriert ist, um an einem Fahrzeug oder an einem anderen Wagen (10) angebracht zu werden, wobei eine Höhe (h1, h2, h3) definiert ist für jedes Rad-Paar (35, 40, 45) als der Abstand zwischen der Plattform (15) und dem Punkt des Rades (35, 40, 45), der am weitesten von der Plattform (15) entfernt ist, wobei das Paar fixer Räder (35), entlang einer Längsachse (X) des Wagens (10), zwischen den beiden Paaren bewegbarer Räder (40, 45) angeordnet ist,
wobei der Wagen (10) **dadurch gekennzeichnet ist, dass** das erste Paar bewegbarer Räder (40) entlang der Hochachse (Z) bewegbar ist zwischen einer Oben-Position, in welcher die beiden Paare bewegbarer Räder (40, 45) und das Paar fixer Räder (35) im Wesentlichen gleiche Höhen (h1, h2, h3) haben, und einer Unten-Position, in welcher die Höhe (h2) des ersten Paares (40) strikt größer als die Höhe (h1) des Paares fixer Räder (35) ist, und dass der Wagen (10) einen Verriegelungsmechanismus (50) aufweist, der konfiguriert ist, um das erste Paar (40) in der Unten-Position zu halten, wenn die Deichsel (20) in ihrer Aufgestellt-Position ist.

2. Wagen (10) gemäß Anspruch 1, wobei das erste Paar (40) konfiguriert ist, um via Schwerkraft von seiner Oben-Position aus in seine Unten-Position verlagert zu werden, wenn der Wagen (10) angehoben wird.

3. Wagen (10) gemäß Anspruch 1 oder 2, wobei die Plattform (15) einen ersten (55) und einen zweiten (60) Endabschnitt hat, wobei das erste Paar bewegbarer Räder (40) am ersten Endabschnitt (55) angeordnet ist, das zweite Paar bewegbarer Räder (45) am zweiten Endabschnitt (60) angeordnet ist und die Deichsel (20) am ersten Endabschnitt (55) angebracht ist.

4. Wagen (10) gemäß irgendeinem der Ansprüche 1 bis 3, wobei das erste Paar (40) mit eine Platte (30) fest verbunden ist, die bezüglich der Plattform (15) translationsbewegbar ist.

5. Wagen (10) gemäß Anspruch 4, wobei der Verriegelungsmechanismus (50) aufweist einen Anschlag (90), der mit der Plattform (15) fest verbunden ist, und Steuermittel (95), die fest mit der Platte (30) verbunden sind, wobei die Steuermittel (95) von der Deichsel (20) verlagerbar sind zwischen einer Verriegelungsposition, verhindernd eine Verlagerung des ersten Paars (40) von dessen Unten-Position aus in dessen Oben-Position, und einer Entriegelungsposition, erlaubend eine Verlagerung des ersten Paars (4) von dessen Unten-Position aus in dessen Oben-Position.

6. Wagen (10) gemäß Anspruch 5, wobei die Deichsel (20) um eine Achse bewegbar ist, die mit der Plattform (15) fest verbunden ist, und die Steuermittel (95) eine erste Querstange (110) aufweisen, wobei die Steuermittel (95) um eine Querachse drehbewegbar sind, die fest mit der Plattform (30) verbunden ist, und konfiguriert sind, um, wenn die Deichsel (20) von deren Abgesenkt-Position aus in deren Aufgestellt-Position verlagert wird, die Deichsel (20) in Anschlag gegen die erste Stange (110) kommt, um die Steuermittel (95) von deren Entriegelungsposition aus in deren Verriegelungsposition zu verlagern.

7. Wagen (10) gemäß Anspruch 6, wobei die Steuermittel (95) eine zweite Quersange (115) aufweisen, die konfiguriert ist, um, wenn die Deichsel 820) von deren Aufgestellt-Position aus in deren Abgesenkt-Position verlagert wird, die Deichsel (20) in Anschlag gegen die zweite Stange (115) kommt, um die Steuermittel (95) von deren Verriegelungsposition aus in deren Entriegelungsposition zu verlagern.

8. Wagen (10) gemäß Anspruch 7, wobei ein Abstand zwischen der ersten Stange (110) und der zweiten Stange (115) zwischen 40 Millimeter und 50 Millimeter beträgt.

9. Wagen (10) gemäß irgendeinem der vorhergehenden Ansprüche, wobei ein Abstand zwischen der Oben-Position und der Unten-Position des ersten Paars Räder (40) zwischen 30 Millimeter und 60 Millimeter beträgt.

10. Einrichtung mit wenigstens einem Wagen (10) gemäß irgendeinem der Ansprüche 1 bis 9 und einem Fahrzeug, das imstande ist, den oder die Wagen (10) zu ziehen.

## Claims

1. Trolley (10) comprising a platform (15), a drawbar (20), a first (40) and a second (45) pair of movable wheels and a pair of fixed wheels (35), each wheel (35, 40, 45) being configured to pivot about a transverse axis, each movable wheel (40, 45) further being configured to pivot, relative to the platform (15), about an elevation axis (A4) substantially perpendicular to the transverse axis, the drawbar (20) being rotatable relative to the platform (15) between a raised position and a lowered position in which the drawbar (20) is configured to be fixed to a vehicle or to another trolley (10), a height (h1, h2, h3) being defined for each pair of wheels (35, 40, 45) as being the distance between the platform (15) and the point of the wheel (35, 40, 45) that is furthest away from the platform (15), the pair of fixed wheels (35) being interposed, along a longitudinal axis (X) of the trolley (10), between the two pairs of movable wheels (40, 45),
the trolley (10) being **characterised in that** the first pair of movable wheels (40) is movable along the elevation axis (Z) between a top position in which the two pairs of movable wheels (40, 45) and the pair of fixed wheels (35) have substantially identical heights (h1, h2, h3), and a bottom position in which the height (h2) of the first pair (40) is strictly greater than the height (h1) of the pair of fixed wheels (35), and **in that** the trolley (10) comprises a locking mechanism (50) which is configured to hold the first pair (40) in the bottom position when the drawbar (20) is in its raised position.

2. Trolley (10) according to claim 1, wherein the first pair (40) is configured to be displaced by gravity from its top position to its bottom position when the trolley (10) is lifted.

3. Trolley (10) according to claim 1 or 2, wherein the platform (15) has a first (55) and a second (60) end portion, the first pair of movable wheels (40) being positioned at the first end portion (55), the second pair of movable wheels (45) being positioned at the second end portion (60), the drawbar (20) being fixed to the first end portion (55).

4. Trolley (10) according to any one of claims 1 to 3, wherein the first pair (40) is secured to a plate (30) which is movable in translation relative to the platform (15).

5. Trolley (10) according to claim 4, wherein the locking mechanism (50) comprises a stop (90) which is secured to the platform (15), and control means (95) which are secured to the plate (30), the control means (95) being displaceable by the drawbar (20) between a locking position, which prevents the first pair (40) from being displaced from its bottom position to its top position, and an unlocking position, which allows the first pair (40) to be displaced from its bottom position to its top position.

6. Trolley (10) according to claim 5, wherein the drawbar (20) is movable about a shaft which is secured to the platform (15), and the control means (95) comprise a first transverse bar (110), the control means (95) being rotatable about a transverse axis which is secured to the plate (30) and being configured so that, when the drawbar (20) is displaced from its lowered position to its raised position, the drawbar (20) comes into abutment against the first bar (110) in order to displace the control means (95) from their unlocking position to their locking position.

7. Trolley (10) according to claim 6, wherein the control means (95) comprise a second transverse bar (115) which is configured so that, when the drawbar (20) is displaced from its raised position to its lowered position, the drawbar (20) comes into abutment against the second bar (115) in order to displace the control means (95) from their locking position to their unlocking position.

8. Trolley (10) according to claim 7, wherein a distance between the first bar (110) and the second bar (115) is between 40 millimetres and 50 millimetres.

9. Trolley (10) according to any one of the preceding claims, wherein a distance between the top and bottom positions of the first pair of wheels (40) is between 30 millimetres and 60 millimetres.

10. Assembly comprising at least one trolley (10) according to any one of claims 1 to 9 and a vehicle capable of towing the trolley(s) (10).
